# EUROPEAN PATENT SPECIFICATION

(11) **EP 1 462 667 B1**
(45) Date of publication and mention of the grant of the patent: **21.05.2008**
(21) Application number: 04006198.8
(22) Date of filing: 16.03.2004
(51) Int. Cl.: F16C 7/04, F02B 75/04, F02B 41/04

(54) **Spring-based crankshaft coupling structure for engine**
Kurbelwellenverbindung mit einer Feder für eine Brennkraftmaschine
Structure de liaison à ressort d'un vilebrequin d'un moteur à combustion interne

(30) Priority: 26.03.2003 US 457300 P; 06.02.2004 US 772460
(43) Date of publication of application: 29.09.2004
(73) Proprietor: Meyer, Siegfried, 86732 Oettingen (DE)
(72) Inventor: Meyer, Siegfried, 86732 Oettingen (DE)
(74) Representative: Petra, Elke

(56) References cited:
- DE-A- 3 339 360
- GB-A- 118 411
- US-A- 1 539 769
- US-B1- 6 467 373

## Description

### BACKGROUND OF THE INVENTION

### 1. Field of the invention

The present invention relates to an internal combustion end and, more specifically, to a spring-based crankshaft coupling structure for use in an engine to connect a crankshaft to a piston and to increase the output torque of the engine, (compare with DE-A-3339360 and/or US-A-6467373).

### 2. Description of the Related Art

In a typical internal combustion engine, of the type found in most vehicles today, a plurality of pistons are respectively movably mounted in a plurality of cylinders formed in an engine block. Each of the pistons has one end connected with a piston rod and the other end coupled to a crankshaft. When spark plugs in the engine block fired to ignite fuel mixture, the pistons are driven downward to turn the crankshaft, which ultimately drives the entire vehicle. At present, in a typical engine, connecting rods are used and connected with the respective first end to the corresponding piston and the respective second end to the corresponding crankshaft. The connecting points between the two ends of each connecting rod and the corresponding piston and corresponding crankshaft are disposed at the ends of the longitudinal center axis of the respective connecting rod. By means of the coupling of the connecting rod between the corresponding piston and the corresponding crankshaft, reciprocating motion of the piston causes the corresponding crankshaft to rotate.

Presently, researchers have reported many studies to enhance the output torque by extending the moving distance of the connecting rods between the pistons and the crankshafts.

### SUMMARY OF THE INVENTION

The present invention has been accomplished under the circumstances in view. It is one object of the present invention to provide a crankshaft coupling structure for engine, which greatly enhances the output torque of the engine.

It is another object of the present invention to provide a crankshaft coupling structure for use engine, which saves fuel consumption of the engine.

It is still another object of the present invention to provide a crankshaft coupling structure for engine, which improves the performance of the engine, resulting in reduced amount of solid matter in exhaust gas of the engine.

To achieve these and other objects of the present invention, the crankshaft coupling structure is installed in an engine and coupled between a piston and a crankshaft, comprising a first coupling member pivoted to the piston, the first coupling member comprising a downwardly extended receiving open chamber defined in a downwardly extended hollow body thereof and an inner tube suspended in the downwardly extended receiving open chamber inside the downwardly extended hollow body; a second coupling member pivoted to the crankshaft, the second coupling member comprising an upwardly extended hollow body inserted into the downwardly extended receiving open chamber and axially movably sleeved onto the inner tube, and an upwardly extended receiving open chamber defined in the upwardly extended hollow body thereof and adapted to receive the inner tube and an axially compressible spring member mounted in the inner tube inside the first coupling member and coupled between the first coupling member and the second coupling member.

### BRIEF DESCRIPTION OF THE DRAWINGS

The accompanying drawing is included to provide a further understanding of the invention, and is incorporated in and constitutes a part of this specification. The drawing illustrates an embodiment of the invention and, together with the description, serves to explain the principles of the invention. In the drawing,
FIG. 1 is a plain view showing the spring-based crankshaft coupling structure coupled between a piston and a crankshaft according to the present invention.
FIG. 2 is a sectional view, showing the detailed structure of the spring-based crankshaft coupling structure coupled between a piston and a crankshaft according to the present invention.
FIG. 3 is a schematic drawing showing the action of the spring-based crankshaft coupling structure according to the present invention...
FIGS. 3A-3D are schematic drawings showing one moving cycle of the spring-based crankshaft coupling structure with the piston from the top dead center to the bottom dead center and then from the bottom dead center back to the top dead center according to the present invention.

### DETAILED DESCRIPTION OF ILLUSTRATIVE EMBODIMENT

Reference will now be made in detail to the illustrative embodiment of the present invention, examples of which are illustrated in the accompanying drawings. Wherever possible, the same reference numbers are used in the drawings and the description to refer to the same or like parts.

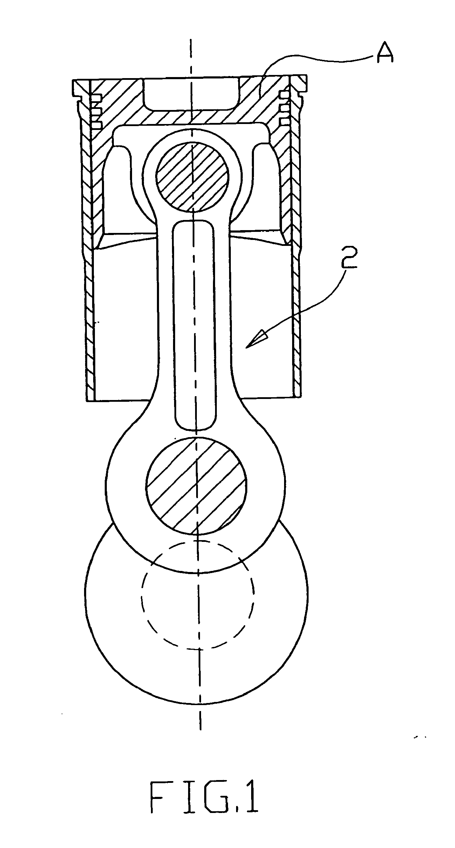

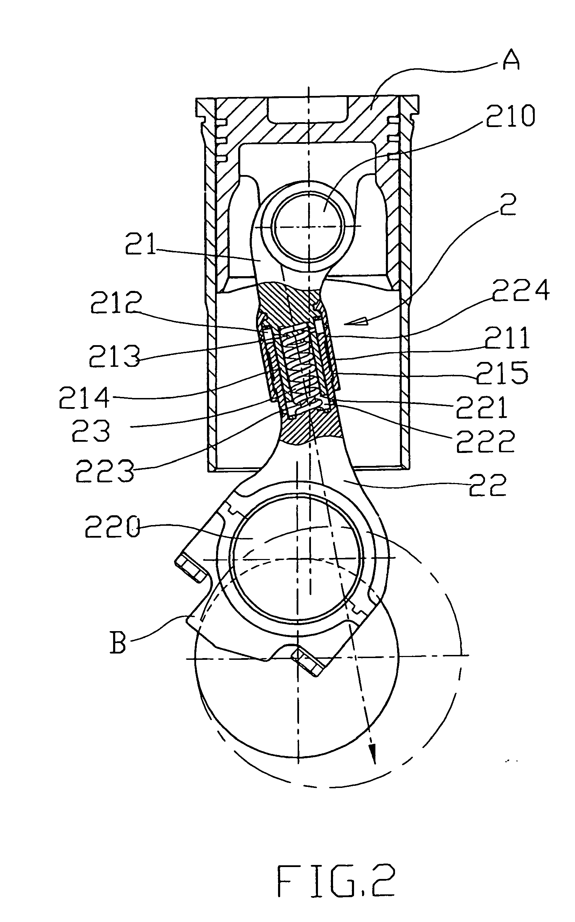

Referring to FIGS. 1-3, a spring-based crankshaft coupling structure **2** is shown comprised of a first coupling member **21**, a second coupling member **22**, and an axially compressible spring member **23**.

The first coupling member **21** is pivoted to a piston **A** by a pivot pin **210**, comprising a downwardly extended hollow body **211**, a receiving open chamber **212** defined in the hollow body **211**, an inner tube **213** suspended in the receiving open chamber **212**, and a stem **214** coaxially suspended in the inner tube **213**.

The second coupling member **22** is pivoted to a crankshaft **B** by a pivot pin **220**, comprising an upwardly extended hollow body **221**, which is inserted into the receiving open chamber **212** inside the hollow body **211** and axially movably sleeved onto the inner tube **213**, a receiving open chamber **222** defined in the hollow body **221** and adapted to receive the inner tube **213**, and a stem **223** suspended in the receiving open chamber **222** corresponding to the stem **214** in the first coupling member **21**.

The spring member **23** according to the present invention is a compression spring mounted inside the inner tube **213** and connected between the stem **214** of the first coupling member **21** and the stem **223** of the second coupling member **22**. The spring member **23** imparts an outward pressure to the second coupling member **22** against the first coupling member **21**, i.e., the spring member **23** forces the second coupling member **22** away from the first coupling member **21**.

Further, in order to prevent disconnection of the second coupling member **22** from the first coupling member **21**, a stop structure is provided. According to this embodiment, the stop structure comprises a first annular stop flange **215** radially inwardly protruded from the bottom end of the Hollow body **211** of the first coupling member **21**, and a second annular stop flange **224** radially outwardly protruded from the top end of the hollow body **221** of the second coupling member **22**. The outer diameter of the second annular stop flange **224** is approximately equal to the inner diameter of the hollow body **211** of the first coupling member **21** so that the second annular stop flange **224** can be moved with the second coupling member **22** smoothly and stably in the receiving open chamber **212** along the inner tube **213**. The inner diameter of the first annular stop flange **215** is approximately equal to the outer diameter of the hollow body **221** of the second coupling member **22**. When extending the second coupling member **22** out of the first coupling member **21**, the second annular stop flange **224** will be stopped at the first annular stop flange **215**, preventing disengagement of the second coupling member **22** from the first coupling member **21**.

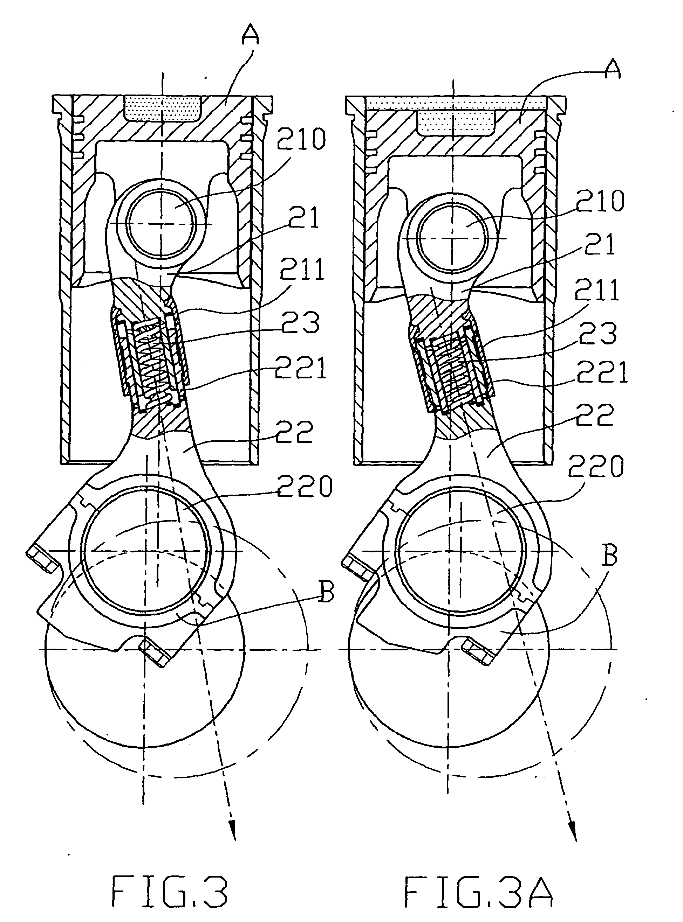

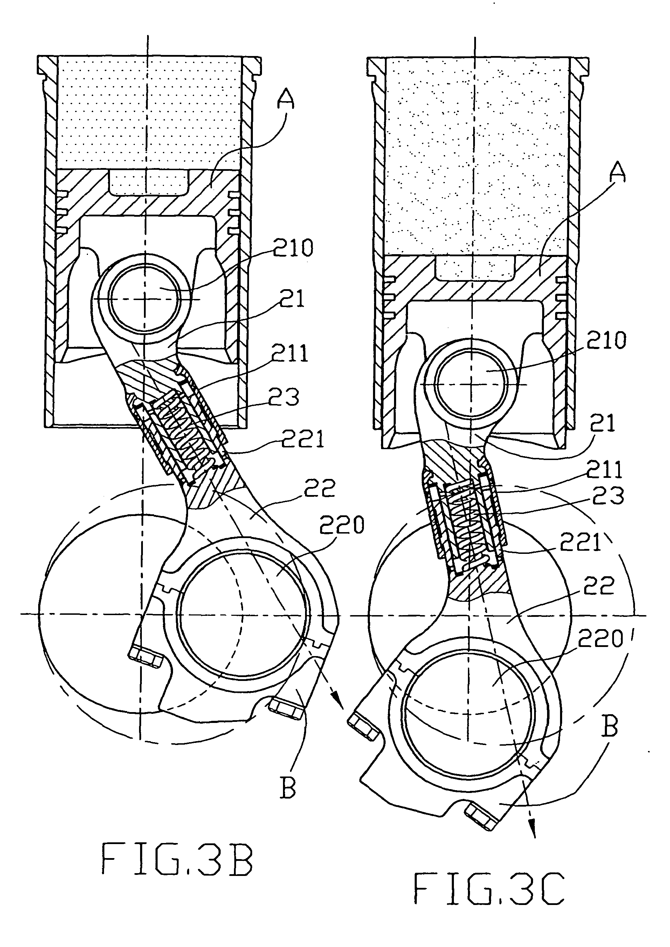

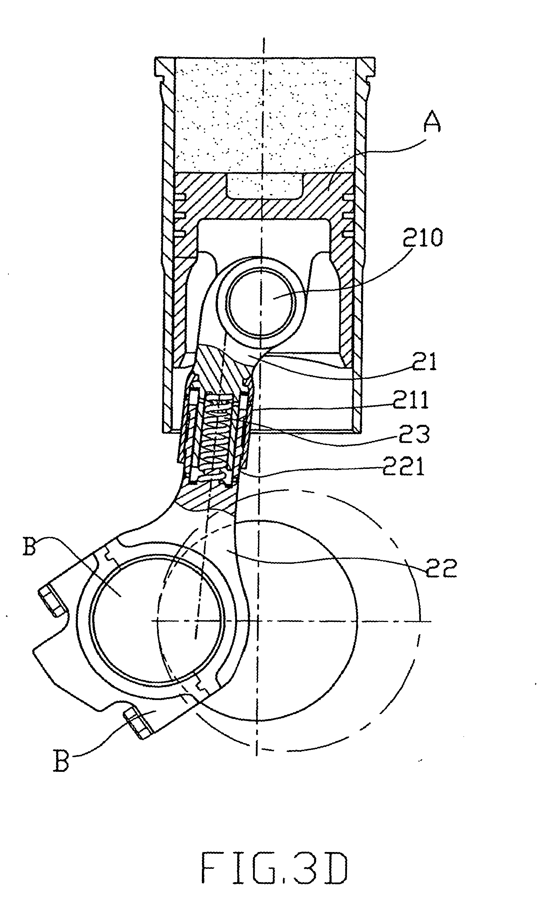

Referring to FIGS. 3A-3D, when the spring-based crankshaft coupling structure **2** moved with the piston **A** to the top dead center in the combustion engine, the second coupling member **22** is lifted to compress the spring member **23**. During the down stroke of the piston **A** from the top dead center in the combustion engine toward the bottom dead center, the spring member **23** is released to force the second coupling member **22** outwards relative to the first coupling member **21**. Therefore, the invention extends the stroke of the spring-based crankshaft coupling structure **2**, enhancing the output torque of the engine...

As indicated above, the spring-based crankshaft coupling structure of the present invention uses two coupling members sliding one with the other to couple the crankshaft to the piston and an axially compressible spring member to join the coupling members. This arrangement greatly enhances the output torque of the engine. Because the invention greatly improves the performance of the engine, it makes the engine to save fuel consumption and to reduce waste gas production.

A prototype of spring-based crankshaft coupling structure for engine has been constructed with the features of FIGS. 1∼3. The spring-based crankshaft coupling structure for engine functions smoothly to provide all of the features discussed earlier.

Although a particular embodiment of the invention has been described in detail for purposes of illustration, various modifications and enhancements may be made.

## Claims

1. A spring-based crankshaft coupling structure used in an engine and coupled between a piston and a crankshaft to enhance the output torque of the engine, comprising:
a first coupling member pivoted to said piston, said first coupling member comprising a downwardly extended receiving open chamber defined in a downwardly extended hollow body thereof and an inner tube suspended in said downwardly extended receiving open chamber inside said downwardly extended hollow body;
a second coupling member pivoted to said crankshaft, said second coupling member comprising an upwardly extended hollow body inserted into the downwardly extended receiving open chamber and axially movably sleeved onto said inner tube, and an upwardly extended receiving open chamber defined in said upwardly extended hollow body thereof and adapted to receive said inner tube and
an axially compressible spring member mounted in said inner tube inside said first coupling member and coupled between said first coupling member and said second coupling member..

2. The spring-based crankshaft coupling structure as claimed in claim 1, wherein said first coupling member comprises a stem coaxially suspended inside said inner tube; said second coupling member comprises a stem suspended in said upwardly extended receiving open chamber and aimed at the stem of said first coupling member; said axially compressible spring member has two ends respectively fastened to the stem inside said first coupling member and the stem inside said second coupling member..

3. The spring-based crankshaft coupling structure as claimed in claim 2, further comprising stop means adapted to limit the distance of axial movement of said second coupling member relative to said first coupling member.

4. The spring-based crankshaft coupling structure as claimed in claim 3, wherein said stop means comprises a first annular stop flange radially inwardly protruded from a bottom end of the hollow body of said first coupling member and disposed in contact with the periphery of the hollow body of said second coupling member, and a second annular stop flange radially outwardly protruded from a top end of the hollow body of said second coupling member and disposed in contact with an inside wall of the hollow body of said first coupling member.

5. The spring-based crankshaft coupling structure as claimed in claim 1, wherein said axially compressible spring member is a compression spring.

## Patentansprüche

1. In einer Maschine verwendete federgestützte Kurbelwellen-Verbindungsstruktur, die zwischen einem Kolben und einer Kurbelwelle angeschlossen ist, um ein Abtriebsdrehmoment der Maschine zu verbessern, umfassend:
- ein erstes drehbar an dem Kolben gelagertes Anschlußelement, wobei das erste Anschlußelement eine sich abwärts erstreckende aufnehmende offene Kammer umfaßt, die in einem abwärts erstreckenden Hohlkörper davon definiert ist und ein inneres Rohr, das in der sich abwärts erstreckenden aufnehmenden offenen Kammer innerhalb des sich abwärts erstreckenden Hohlkörpers aufgehängt ist;
- ein zweites drehbar an die Kurbelwelle gelagertes Anschlußelement, wobei das zweite Anschlußelement einen sich aufwärts erstreckenden Hohlkörper umfaßt, der in der sich abwärts erstreckenden aufnehmenden offenen Kammer eingefügt ist und axial auf dem inneren Rohr in Art einer Hülse gleitet, und eine sich aufwärts erstreckende aufnehmende offene Kammer die in dem aufwärts erstreckenden Hohlkörper davon definiert ist und geeignet ist, das innere Rohr aufzunehmen und
- ein axial komprimierbares Federelement, das in dem inneren Rohr innerhalb des ersten Anschlußelements befestigt ist und zwischen dem ersten Anschlußelement und dem zweiten Anschlußelement angeschlossen ist.

2. Kurbelwellen-Verbindungsstruktur nach Anspruch 1,
wobei das erste Anschlußelement einen innerhalb des inneren Rohres koaxial aufgehängten Schaft umfaßt; das zweite Anschlußelement einen in der sich aufwärts erstreckenden aufnehmende offene Kammer aufgehängten Schaft umfaßt und auf den Schaft des ersten Anschlußelements gerichtet ist; wobei das axial komprimierbare Federelement zwei Enden aufweist, die jeweils entsprechend an dem Schaft innerhalb des ersten Anschlußelements und dem Schaft innerhalb des zweiten Anschlußelements befestigt sind.

3. Kurbelwellen-Verbindungsstruktur nach Anspruch 2,
ferner Anschlagsmittel umfassend die geeignet sind den Abstand der axialen Bewegung des zweiten Anschlußelements in Bezug auf das erste Anschlußelement zu begrenzen.

4. Kurbelwellen-Verbindungsstruktur nach Anspruch 3,
wobei das Anschlagsmittel umfaßt, einen ersten ringförmigen Anschlagflansch, der radial nach innen von einem unteren Ende des Hohlkörpers des ersten Anschlußelements ragt und in Kontakt mit der Peripherie des Hohlkörpers des zweiten Anschlußelements angeordnet ist, und einen zweiten ringförmigen Anschlagsflansch, der von einem oberen Ende des Hohlkörpers des zweiten Anschlußelements radial nach außen ragt und in Kontakt mit einer Innenwand des Hohlkörpers des ersten Anschlußelements angeordnet ist.

5. Kurbelwellen-Verbindungsstruktur nach Anspruch 1,
wobei das axial komprimierbare Federelement eine Kompressionsfeder ist.

## Revendications

1. Structure d'accouplement à ressort d'un vilebrequin, utilisée dans un moteur et couplée entre un piston et un vilebrequin pour augmenter le couple de sortie du moteur, comprenant :
un premier élément d'accouplement monté pivotant sur le piston, le premier élément d'accouplement comprenant une chambre ouverte de réception s'étendant vers le bas, définie en son corps creux s'étendant vers le bas et en un tube intérieur suspendu dans la chambre ouverte de réception s'étendant vers le bas à l'intérieur du corps creux s'étendant vers le bas ;
un deuxième élément d'accouplement monté pivotant sur le vilebrequin, le deuxième élément d'accouplement comprenant un corps creux s'étendant vers le haut, inséré dans la chambre ouverte de réception s'étendant vers le bas et manchonné de manière mobile axialement sur le tube intérieur et une chambre ouverte de réception s'étendant vers le haut, définie en son corps creux s'étendant vers le haut et conçue pour recevoir le tube intérieur et
un élément à ressort pouvant être comprimé axialement, monté dans le tube intérieur à l'intérieur du premier élément d'accouplement et couplé entre le premier élément d'accouplement et le deuxième élément d'accouplement.

2. Structure d'accouplement à ressort d'un vilebrequin suivant la revendication 1, dans laquelle le premier élément d'accouplement comprend une tige suspendue coaxialement à l'intérieur du tube intérieur ; le deuxième élément d'accouplement comprend une tige suspendue dans la chambre ouverte de réception s'étendant vers le haut et dirigée vers la tige du premier élément d'accouplement ; l'élément à ressort pouvant être comprimé axialement ayant deux extrémités fixées respectivement à la tige à l'intérieur du premier élément d'accouplement et à la tige à l'intérieur du deuxième élément d'accouplement.

3. Structure d'accouplement à ressort d'un vilebrequin suivant la revendication 2, comprenant, en outre, des moyens de butée conçus pour limiter la distance du déplacement axial du deuxième élément d'accouplement par rapport au premier élément d'accouplement.

4. Structure d'accouplement à ressort d'un vilebrequin suivant la revendication 3, dans laquelle les moyens de butée comprennent une première bride annulaire de butée faisant saillie radialement vers l'intérieur d'une extrémité de fond du corps creux du premier élément d'accouplement et en contact avec la périphérie du corps creux du deuxième élément d'accouplement et une seconde bride annulaire de butée faisant saillie radialement vers l'extérieur d'une extrémité supérieure du corps creux du deuxième élément d'accouplement et en contact avec la paroi intérieure du corps creux du premier élément d'accouplement.

5. Structure d'accouplement à ressort d'un vilebrequin suivant la revendication 1, dans laquelle l'élément à ressort pouvant être comprimé axialement est un ressort de compression.
